# EUROPEAN PATENT SPECIFICATION

(11) **EP 0 720 410 B1**
(45) Date of publication and mention of the grant of the patent: **03.09.2003**
(21) Application number: 95117229.5
(22) Date of filing: 02.11.1995
(51) Int. Cl.: H04Q 11/04, H04L 12/56, H04L 29/06

(54) **Method for implementation the ATM adaptation layer functions**
Verfahren zur Implementierung der Funktionen der ATM-Anpassungsschicht
Procédé de réalisation des fonctions de la couche d'adaptation ATM

(30) Priority: 23.12.1994 IT MI942624
(43) Date of publication of application: 03.07.1996
(73) Proprietor: Italtel S.p.a., 20154 Milano (IT); Siemens Mobile Communications S.p.A., 20126 Milano (IT)
(72) Inventor: Profumo, Albertino, I-20147 Milan (IT)
(74) Representative: Giustini, Delio

(56) References cited:
- FIORETTO G ET AL: "ATM BASED NETWORK TRANSPORT SERVICE" INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, vol. 3, 15 April 1990 (1990-04-15), pages 826-830, XP000145955

## Description

### Field of the Invention

The present invention relates to solutions of interest in the context of networks for the supply of interactive multimedia services where the ATM mode (Asynchronous Transfer Mode) is used also only in limited areas or islands. In the future it will be possible to apply the invention in the context of the B-ISDN network.

In particular the invention is used in those elements of the network called Multimedia Servers able to memorise the multimedia material, and they are suitable to supply the same in response to a specific request coming from the customers: it is also used in the access network or in the multimedia terminals according to the point in which the ATM network ends.

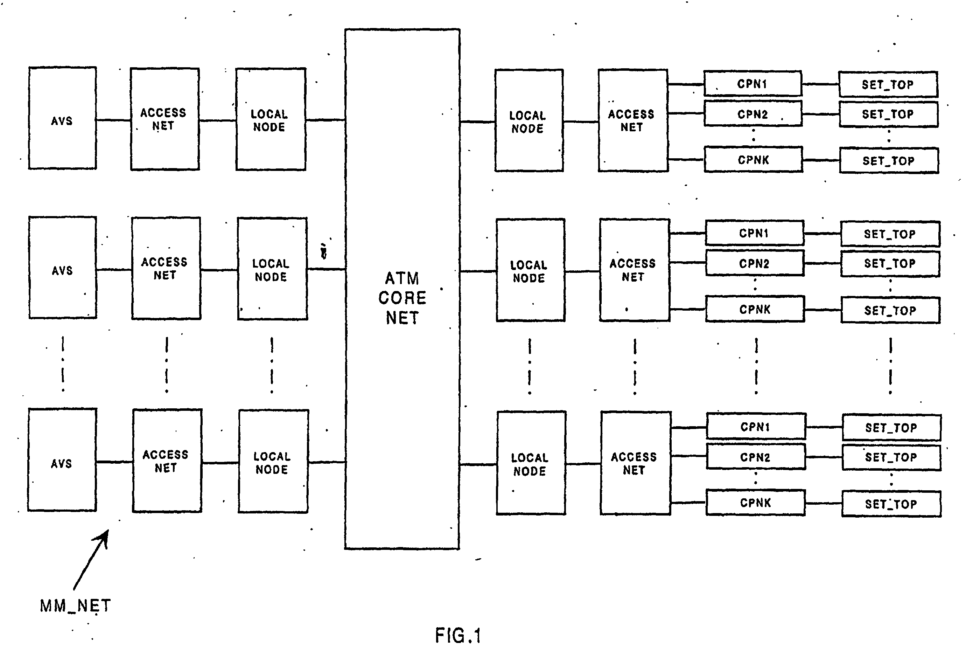

Figure 1 is a schematic diagram of a network for the supply of interactive multimedia services labelled as a whole by MM-NET, including a switching system ATM-SW, local switching nodes LOCAL-NODE and local access networks ACCESS-NET.

To the local access networks ACCESS-NET multimedia server devices AVS and customer networks CPN₁, ..., CPN_{K} (Customer Premises Network).

The servers AVS are for example dedicated to services of the Video On Demand type.

To each one of the customer networks CPN one or more user terminals are connected, the so called SET-TOPs, each one of which carries out multimedia flow processing functions.

In order to make it possible to transmit on the ATM networks the data flow resulting from the coding of a certain audio video sequence, representative of a certain multimedia service, it is necessary to adapt said data flow in a sequence of ATM cells, each one of which is composed by 48 payload bytes and by 5 headers bytes for a total of 53 bytes.

The data flow has therefore to be opportunely adapted to be inserted in the payload of the ATM cells. In order to be able to carry out the typical controls of the transmission networks (error, sequence, etc.) some of the 48 available bytes are occupied by additional service informations, while the remaining bytes are occupied by the data of the multimedia flow. In order to guarantee that the user's terminal will be able, after having received the cells, to reconstruct correctly the audio video sequences associated to the data flows it is not only necessary that the flows will be reconstructed after having carried out all controls on their correct reception (reassembling operation), but it is also necessary that the time synchronisms are reconstructed and reproduced. Such synchronisms are originally associated to the audio visual sequences and as a consequence to the multimedia data flows resulting from the coding of the same sequences; this particular necessity distinguishing this adaptation protocol from those which do not require the synchronization of the source with the receiver.

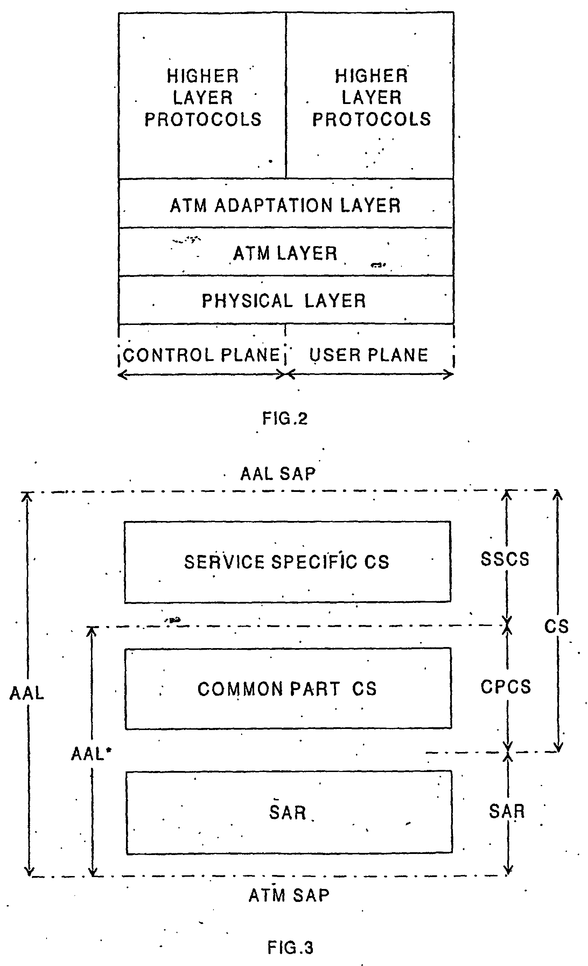

The adaptation of the multimedia data flow in the ATM cells, the following transmission of the ATM cells in the ATM network, the reception of the ATM cells, the extraction and the reconstruction of the multimedia data flow are carried out by the execution of a ordered succession or stack of protocols at different layers illustrated schematically in Fig. 2 where the rectangles represent schematically the series of operations carried out on the data. The information transfer requires the execution of protocols of different hierarchical levels from top to bottom; in reception the protocols are executed from bottom to top.

The invention relates to the so called ATM adaptation layer labelled AAL (ATM Adaptation Layer) which, as illustrated in Fig. 2, is situated between the protocol layers of higher order HLP (Higher Layer Protocols) corresponding to the processing functions of the audio visual sequences and of the multimedia data flow, and the ATM layer. The invention relates in particular to the AAL layer labelled AAL2 for digital data flows at variable speed which require the synchronization of the receiver with the source.

### Background Art

For the transmission of multimedia data flows, methods based on the ATM protocol AAL1 (recommendation ITU-TI.363) are actually known and used.

This method requires as a fundamental functioning requirement that the data of the multimedia flows are transmitted at constant speed. Specific example of protocol AAL is disclosed in the document FIORETTO G ET AL: 'ATM BASED NETWORK TRANSPORT SERVICE' INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, vol. 3, 15 April 1990 (1990-04-15), pages 826-830, wherein a 'core and edge' structure for an ATM based network transport service is used, which minimizes the Adaptation Layer (AAL) functions required in the ATM network for the information transport.

This causes problems for the realization of the AVS servers that, making use of storage magnetic discs, read the data of the multimedia flows in a discontinued way through the reading of large data blocks corresponding to single reading accesses of the discs.

As these discontinued readings have to be adapted to the before mentioned transfer method at constant speed it turns out to be necessary to memorise on suitable RAM memories the entire data block read during a single access to the magnetic disc.

The data block memorised on the RAM must be read again at constant speed maintaining perfectly synchronized the generation procedure of the flow at constant speed with the updating procedure of the data on the RAM memory, and therefore with the reading accesses to the magnetic discs.

Furthermore as the multimedia data is generally generated through a coding procedure at constant speed it is necessary for the correct reproduction of the audio visual sequences that the constant transmission speed corresponds with high precision to the constant coding speed: but unfortunately the latter varies from one sequence to the other according to the coding system and the parameters used (the coding speed is a parameter which is memorised on magnetic discs in the header of each memorised flow).

All this makes it necessary to use for each treated flow (and therefore for each user served by the AVS), apart from synchronization circuits of the discontinued reading speed of said magnetic disc with the constant transmission speed, also programmable generation circuit of transmission speed in order to comply with above-described constraint between the transmission speed and the codification speed.

A flow adaptation method that does not require that the multimedia data flows are transmitted at rigidly constant speed would therefore present numerous advantages.

A first advantage would consist in the fact that the informations read from the discs of the AVS servers could be sent into the network minimizing the storage time in the RAM memory obtaining in this way a drastic reduction of the memory buffer dimensions present inside the multimedia AVS servers, with the consequent sensible reduction of the implementation costs of the latter ones.

A second advantage would consist in the fact that a method of this type, not requiring any programmable device for the generation of the transmission speed of the flows and no device for the transmission speed synchronization with the discontinued reading procedure of the magnetic discs would it make possible to reduce in a considerable way the general complexity and the cost of the AVS servers.

### Objects of the Invention

It is one object of the present invention to perform a method for the adaptation in the ATM level of digital data flow at variable speed requiring a synchronization between the source and the receiver, in order to make it possible to perform the transmission of ATM cells at non constant speed.

A particular object of the present invention is to perform a method which makes it possible to manage in a simple and efficient way the adaptation with the ATM layer of multimedia data flows set up by a whatsoever number of components of whatever type.

A further object of the present invention is to perform a method which does not require the adoption of complex and expensive equipment for its realization.

Another object of the present invention is to perform a method allowing also the adaptation of monomedia flows, or at constant speed, in the ATM layer in such a way that the transmission of the ATM cells may occur at a non constant speed, but making it always possible to transport correctly the time synchronisms used for the reconstruction of the original monomedia flow at constant speed.

### Disclosure of the invention

These and other objects are attained through the invention which consists in a method for the implementation of the protocol functions of the ATM adaptation layer for digital data flows at variable speed in a B-ISDN network, said digital data flow being set up by one or more distinct components, each one of them being provided with mechanisms such to be able to collect from the timing of one of these the timing of all the others: said method including an origination function for the adaptation of said digital data flow in a flow of ATM cells and a termination function for the extraction of said digital data flow from said flow of ATM cells, said origination functionality of the adaptation being characterized In that it includes the following steps:
- detecting for each one of said components binary digital data blocks with dimension always smaller than a maximum value and anyhow equal to an entire number of bytes generated with constant frequency;
- identifying among said components of said data flow a particular component;
- identifying a period of time T_{Mj} of a duration equal to the product between the generation period of said data blocks Bj of said particular component and a number of said data blocks of said particular component;
- creating an informative set for each I-th period, being identified by the I-th period a particular period in the sequence of adjacent periods, said informative set being set up by the assemblage, for each one of said components, of the relative number of data blocks all generated within the period T_{Mj} itself;
- creating a Transfer Unit, which coincides with a Convergence Sublayer Payload Data Unit-i, adding to said informative set service informations of the Convergence sublayer;
- splitting up said transfer unit, maintaining the sequentiality of said bytes contained in itself, in a predetermined number of base units, each one with a dimension equal to (48-m) bytes, except the last one, with eventually a smaller dimension;
- adding to each base unit UB, when m>=1, m service bytes of the sublayer SAR, which use is defined thanks to a Type Indication, a field comprised in the m service bytes of the sublayer SAR;
- adding to the last of said base units, when this has a dimension smaller than (48-m) bytes, a number of fictitious information bytes, so that the set of said fictitious information bytes and of the bytes of said base unit have a dimension equal to (48-m) bytes;
- setting up Ni SAR Payload Data Units with a constant dimension equal to 48 bytes given by the set of one base unit and of said m service bytes of the sublayer SAR, when m>=1, or exclusively by a base unit, when m=0;
- performing in such way that each one of the first n SAR Payload Data Units of each group of said Ni SAR Payload Data Units will contain a START Type Indication in the m service bytes SAR;
- inserting the Ni SAR Payload Data Units obtained in this way in to as many Ni ATM cells;
- transmitting, in such a way that the beginning of the transmission of the first cell of all said groups of Ni cells occurs in strict instant coincidence Ck(i), all one as with respect to the other at constant time distance and equal to T_{Mj}, and that the transmission of all said groups of Ni cells will be completed before the following instant Ck(i+1), whereby such condition requires a minimum transmission speed of the ATM cells.

The origination function of the adaptation (insertion of the multimedia flows in the payload of the ATM cells), part of the method of the present invention, may be usefully implemented inside the multimedia servers AVS in case these are provided with ATM interfaces, so as proposed in the majority of the architectures of the currently defined networks.

The termination function of the adaptation (extraction of the multimedia flow from the payloads of the ATM cells) part of the method according to the present invention, may be usefully implemented inside the user terminals SET-TOP in case these are provided with ATM interfaces.

In the contrary case this termination function may be carried out inside the elements LOCAL-NODE or ACCESS-NET of the network MM-NET in which the ATM connection ends.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
- figure 1 shows a network for the supply of interactive multimedia services;
- figures 2 and 3 show the reference model of the protocols;
- figure 4 shows the structure of the data blocks used in the method according to the present invention, structure corresponding to the information set Si;
- figure 5 shows the subdivision of the transfer unit UTi in Ni Base Units UBi and the following creation of Ni SAR PDUs, starting from the Ni Base Units UBi.

### Detailed Description of a Preferred Embodiment

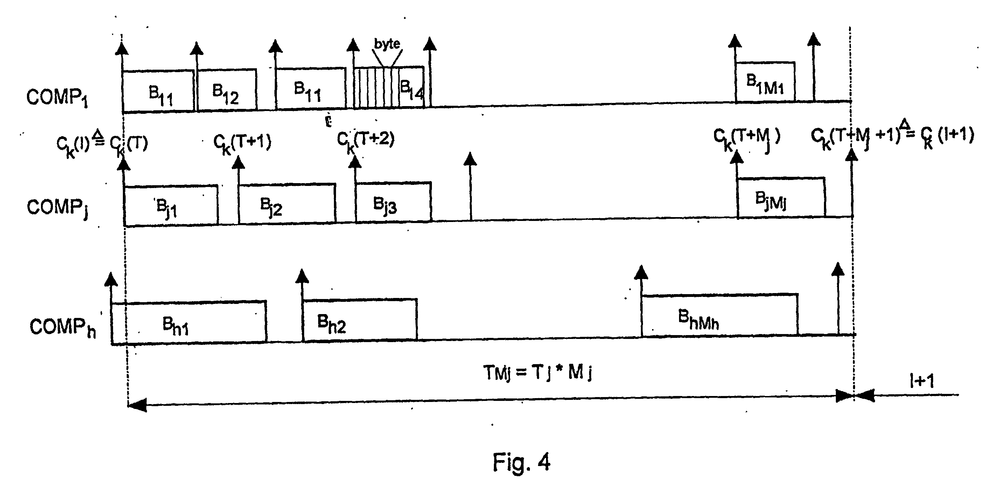

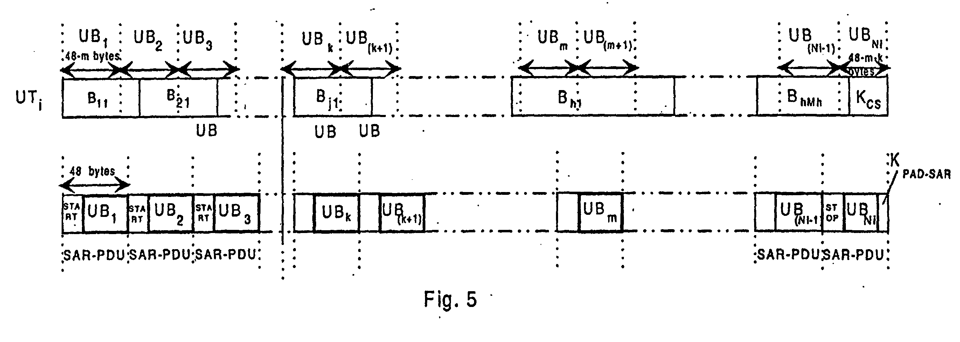

Referring to the alleged Fig. 4 and 5 will be illustrated the various steps of a method according to the present invention applied to a multimedia data flow constituted by a number h equal to three of components at a speed variable in time.

The number of components equal to three refers only to the particular mentioned application, but in general this number may have whatever entire value higher than or equal to one.

The description of the steps of the method according to the present invention will be assembled considering the division of the adaptation layer AAL in two distinct sublayers, the Convergence Sublayer CS and the Segmentation and Reassembly Sublayer SAR, and the fact that the set of the origination and adaptation functions of the multimedia flow in the ATM cell flow is defined origination function of the adaptation, while the set of the functions necessary for the extraction from the ATM flow of the multimedia flow and its following reconstruction is defined termination function of the adaptation.

With reference to Fig. 4, we assume that the multimedia flow destined to be inserted in the ATM cells are set up by the components COMP21, COMP2, ..., and COMPh with h=3 just as an example. Again just as an example one of these components is a video component while the remaining two are audio components. Each one of these components is set up by a relative sequence of data blocks or data packets, and each one of these blocks may have whatever dimension, in any case smaller than a maximum dimension. Such maximum dimension may assume a different value for each component the blocks are part of.

The block sequences of the h components are generated on the basis of a common time reference and must be provided with mechanisms suitable to get from the timing of one of these the timing for all the others.

At least the data block sequence at higher speed has to be generated by a constant time rate: as an example this rate corresponds to the frame speed of the PAL type television sequences equal to 25 Hz.

Now the origination function of the adaptation belonging to the convergence sublayer CS will be described.

According to the invention one of the components is chosen, in general the one the data flow at highest bit rate is associated to, in the example the video component indicated by COMPj.

For the so chosen component COMPj the generation period of the blocks Bj indicated in Fig. 4 by Tj (in the example equal to 40 ms) is identified. The generation frequency 1/Tj of these blocks has been indicated by Fj (equal to 25Hz in the example).

A certain number Mj (for example equal to 12) of these data blocks Bj are assembled in a period T_{MJ} with a duration equal to the product between Tj and Mj (in the example 480 ms).

The clock pulses Ck(T), corresponding to the beginning of each period with the duration Tj, arriving from the user's application layer HLP (or origination function of the codified flow) are processed in the convergence sublayer CS to generate the periods T_{Mj}; to the segmentation and reassembly sublayer SAR are therefore transferred the impulses Ck(T) as well as the impulses Ck(I), which correspond to the start of each period T_{Mj}.

Alternatively all these clock pulses Ck(T) and Ck(I) are transferred to the convergence sublayer CS or to the sublayer SAR with a constant time offset. Each particular period in the sequence of periods T_{Mj} will be called I-th time period from here on. The subscript i will therefore be used to associate a whatsoever quantity to the I-th time period.

In the same I-th time period are grouped a certain number M₁ of blocks B₁₁, ..., B_{1M1} relevant to the component 1, a number M₂ of blocks B₂₁, ..., B_{2M2} relevant to the component 2, ..., a number Mₕ of blocks Bₕ₁, ..., B_{hMh} relevant to the component h.

The information set up by the Mj blocks Bj, M₁ blocks B₁, ..., and Mₕ blocks Bₕ identified inside the I-th time period has been indicated as a whole by Si where i is the indicator of the I-th period.

In case one of the blocks B₁, ..., Bₕ meets with the end of the I-th period, this block will be inserted inside the set Si+1 following immediately the present set Si.

Starting from the information set Si the corresponding transfer unit UTi shown in Fig. 5 is obtained by adding to the set Si a number K_{CS} of service bytes of the convergence sublayer CS used to transfer Informations such as the number Mj of blocks contained inside the transfer unit, the maximum value of the dimension of the transfer unit, the nominal transmission frequency of the transfer unit, etc.

Therefore counts the relation expressed in number of bytes, D_{UTi}=D_{Si}+K_{CS}, where the dimension (in bytes) of the transfer unit UTi is expressed by D_{UTi} and the dimension in bytes of the set Si by D_{Si}.

The Transfer unit UTi constitutes in this case the I-th Convergence Sublayer-Payload Data Unit, which dimension D_{CS-PDUi} in bytes is in this case equal to the dimension D_{UTi} of the UTi.

Alternatively the CS-PDUi is set up in such a way that it includes also the error correction information (not illustrated in Fig. 5) in order to make the transfer of the CS-PDUi through the ATM network more immune from errors.

The formation mechanism of the CS-PDUi starting from the UTi is therefore the following:
1. the transfer unit UTi is subdivided in BK_i (BK_i is an integer variable number in consequence of the I-th period) coding blocks all of the same dimension D_{Blocco}: these block must not be taken for the blocks Bi of variable dimension which are characteristic of the multimedia flow;
   If the number D_{UTi} of bytes of the UTi is not exactly a multiple of D_{Blocco} the necessary K_{CSPad-i} bytes of fictitious information is added in such a way that the total dimension in bytes will be equal to a D_{Blocco}* BK_i.
   The value K_{CSPad-i} bytes is transferred in one of the K_{CS} service information bytes of the sublayer CS.
   To each one of the BK_i coding blocks, according to an alternative embodiment, redundancy information may be added which is generated through an error correction code: as an not limiting example it is possible to use the Reed Salomon code (128,124), in this case the dimension
   D_{Blocco} of each block is of 124 bytes, while the dimension D_{Bloc-Cod} of the codified block, or including the redundancy information is of 128 bytes. Each coding block is therefore transformed in a codified block of 128 bytes by adding the respective redundancy information.
2. The codified block, according to a further embodiment, is therefore interleaved byte by byte with the bytes of further (K_{b1} -1) codified blocks according to a predetermined interconnection scheme.
   Since the number BK_i of codified blocks contained in a UTi is generally much higher than K_{b1} the result of the coding operation of each UTi will consist in a certain number MXi (MX_i is an integer variable number in consequence of the I-th period) equal to the result of the division of BK_i by K_{b1}. In case where the number BK_i of codified blocks will not be exactly a multiple of K_{b1}, for the setting up of the MXI-th matrix a number
   K_{PaddingBlock-i} of fictitious blocks with predetermined value are added so that the matrix will be completely filled up.
   Even the value K_{PaddingBlock-i} is transferred in one of the K_{CS} service information bytes of the sublayer CS.
   Always as an example it is possible to choose a number K_{b1} equal to 47. The result of the interleaving is a matrix of the dimension 128 per 47 bytes.
3. The set of the so obtained MXi matrixes constitutes the CS-PDUi which is then transferred to the layer SAR. The dimension D_{CS-PDUi} (in bytes) of the CS-PDUi is in this case bigger than the dimension D_{UTi} of the UTi.
With reference to the enclosed Fig. 4 and 5 we are now going to describe the function of origination of the adaptation carried out by the segmentation and reassembly sublayer SAR.

The D_{CS-PDUi} bytes, of the UTi are subdivided in a number Ni of Base Units which are at their turn inserted together with the service bytes of the sublayer SAR in a number Ni of SAR-Payload Data Units or SAR-PDUs with the dimension of 48 bytes in a way that all SAR-PDUs are completely filled up ("filling-up obligation"). In order that this obligation will always be respected, and since the number D_{CS-PDUi} is generally not equal to a multiple of 48 bytes it turns out to be necessary to add a variable number K_{PAD-SARi} of fictitious Information bytes in the last SAR-PDU, so that the relation Ni*48- K_{SAR} = D_{CS-PDUi} + K_{PAD-SARi} is valid where the service byte number of the sublayer SAR is indicated by K_{SAR} while 48 is the number of bytes of each SAR-PDU.

The number K_{PAD-SARi} is transferred in one of the K_{SAR} service bytes of the sublayer SAR. The base units UB have a length of 48 bytes when they occupy completely a SAR-PDU, if such SAR-PDU does not have to include also service bytes of the sublayer SAR:

The service bytes of the sublayer SAR occupy instead, when present, the first or the first m bytes of the SAR-PDU; the rest of the SAR-PDU is then occupied by a base unit UB, which length is complementary to that of the service bytes, in such a way that the sum of the service byte number and of the byte number of the UB will always be equal to 48 ("filling-up obligation").

The ATM cells destined to receive the SAR-PDUs containing at least one service byte of the sublayer SAR will be characterized by a value 1 inserted inside the bit User-to-User indication in the Payload Type Identifier (PTI) field in the header of the same cell.

The ATM cells destined to receive the SAR-PDUs not containing any service byte of the sublayer SAR, i.e. completely filled up by a Base Unit, will be characterized instead by a value 0 in the same bit of the PTI field.

In this way it is possible to appreciate that the service bytes of the sublayer SAR occupy only a small percentage of the global capacity necessary for the transfer of the multimedia flow and of the service bytes themselves.

Alternatively the fist m (m Integer constant) bytes of all SAR-PDUs may be used to transport the service informations of the sublayer SAR in such a way that the Base Unit will always have the same length: then the value of the bit User-to User Indication in the field PTI of the header of the ATM cell is not used to differentiate the different types of SAR-PDUs.

As an not limiting example choosing m=1, each SAR-PDU is set up by a single SAR service byte and by a Base Unit of 47 bytes.

In this way, at the cost of a certain increasing of the capacity dedicated to the transfer of the SAR service bytes, the functions related to the management of the different SAR-PDUs are eliminated with a consequent simplification of the method and further reduction of the complexity and cost of the devices destined to the physical realization of the method itself.

The significance of the service informations of the sublayer SAR is identified, independently from the chosen alternative, thanks to the Type Indication, a field included in the first bits of the first or only SAR service byte when the only one in that SAR-PDU.

The SAR-PDUs transferred into the first n following cells, with n much lower than Ni, of each group of Ni cells relevant to each I-th period include a service byte with START Type Indication (see Fig. 5) which indicates exactly that they are located at the beginning of the group, and denote the beginning of the I-th period; such indication is essential for the transfer of the timing through the ATM network from the point where the multimedia flow is adapted in the ATM layer (adaptation origination function) up to the point where the flow is extracted from it (adaptation termination function).

It is possible to appreciate the fact that, the number of such payloads with START Type Indication being higher than one, the loss of one cell does not imply the loss of the period start indication.

Preferentially in the SAR-PDU of the last cell of each group of Ni cells, a service byte is inserted with Indication of the Type STOP (see Fig. 5) in order to give an end indication of the group of Ni cells relevant to the I-th period.

In an advantageous way the service byte reports the Indication of the SEQ Type In the payload of the k-th, 2k-th, with k equal to 32, and contains also the value of a sequential counting for the verification of the integrity of the transfer of the SAR-PDUs. Preferably the service byte of the payloads in which base units are contained which transfer the block start or data sub-blocks particularly significant of the multimedia flow contains an Indication of the SPEC Type to identify the start of such groups. Such indications make it possible to facilitate the functions for the processing of the multimedia flow where it is received.

In an advantageous way the service byte in the payload of the ATM cell to be transmitted immediately after the instants corresponding to the start of submultiple periods of the period T_{Mj}, or of the period Tj report the Indication of the SYNCREF Type, and allow to give further synchronism indications.

When the operation of allocating the SAR_PDUs in the payload of the Ni ATM cells is completed, and the value of the bit User-to-User indication is assigned in the PTI field of the header of each cell, whenever such bit is used, the transmission of such ATM cells is started off in such a way that the start of the transmission of the first cell of all groups of Ni cells occurs in strict coincidence of Ck(i) instants, all one after the other at constant time distance and equal to T_{Mj}, and that the transmission of all said groups of Ni cells will be completed before the following instant Ck(i+1).

The instant Ck(i) may coincide with the start instant Ck(i+1) of the (I+1)-th time period following to the I-th period, or may be translated by a constant time offset with respect to it.

The fact that the transmission of the first n consecutive cells of all groups of Ni ATM cells has always to start in strict correspondence of the instant Ck(i) introduces a time limit on the time required for the transmission of each group of Ni ATM cells. Indicated by R_{ATM} the transmission speed of the ATM cells must in fact turn out that:
Nj/R_{ATM}<=T_{Mj} for whatever value of Ni and Mj.

In other words such condition requires a minimum transmission speed R_{ATM} of the ATM cells equal to Ni/T_{Mj}.

The impulses Ck(i) are therefore used to start off in strict correspondence to these, the transmission of each group of Ni cells.

The flow of ATM cells obtained in this way is then transferred to the destination point through a very precise connection in the ATM network, through a timed, and therefore not necessarily continuous transmission of groups of Ni cells; the timing is determined by the frequency of the impulses Ck(I).

In the point where the use of ATM ends, e.g. not restrictive in a multimedia terminal, the adaptation termination functions are realized which making the correct extraction and reassembling of the multimedia flow possible.

The termination functions of the adaptation layer may again be split up in the two sublayers of SAR and Convergence.

The termination functions of the sublayer SAR consist first of all in the check of the bit User-to-User Indication of the PTI field of the header of the received ATM cells. When this bit is equal to 1 this means that the service bytes SAR are contained in the SAR-PDU of the corresponding cell.

Alternatively in case the bit User-to-User Indication is not used and all SAR-PDUs contain m service bytes of the sublayer SAR the Type Indication check is directly carried out.

The Type indication check makes it possible to differentiate between bytes of the type START, SEQ, STOP, etc.

When the START type bytes are notices through the Type Indication, in correspondence to the START type byte contained in the first SAR-PDU of each group of n consecutive SAR-PDUs transporting the bytes of this type, an impulse Ck(i)* is generated, which is necessary for the reassembling of the timing of the sets Si.

The impulse Ck(i)* is cleaned for example through a phase lock circuit from cell delay variation introduced by the ATM network, in such a way to obtain a sequence of Ck(i) impulses cleaned from jitters and a sequence of Ck(T) impulses; the first one (Ck(i) impulses) possibly delayed by a constant time offset is preferentially used for the transfer of the sets Si to the HLP layer for the processing of the multimedia flow, the second one (Ck(T)), this one also possibly delayed by a constant time offset, is preferentially used for the correct presentation of the decoded flow on the suitable terminals guaranteeing that the reproduced audio visual sequence maintains the synchronization with the transmitted one.

The reconstruction of the timing of the other components as well as the synchronization between these and those selected are possible thanks to the internal mechanisms at the HLP layer for the processing of the multimedia flow itself, i.e. thanks to the fact that, the block sequences of the different components being generated on the basis of a common time reference, it turns out possible to extract from the timing Ck(I) of the component used as reference the timing of all the others. In this way the extraction of the timing through the START type bytes nullifies the transfer methods of the timing informations inside the HLP layer for the processing of the multimedia flow, such as for example the PCR (Program Clock Reference) fields or the SCR (System Clock Reference) samples: these fields are used in the HLP layer for the processing of the multimedia flow known as MPEG-1 and MPEG-2, respectively.

When the first service byte of a SAR-PDU reports the SYNCREF Type Indication synchronism signals are advantageously generated: these signals, possibly delayed by a delay equal to that undergone by the reconstructed impulses Ck(I)*, are also given in input to the phase lock circuit in order to improve the performances of the circuit itself in the reconstruction of the sequences cleaned from jitters.

When SEQ type bytes are noticed thanks to the Type Indication, in an advantageous way is checked if since the reception of the previous SAR-PDU containing a SEQ type, byte the reception of exactly k cells has occurred, and in this case the reception integrity is confirmed, and all bytes of the UBs contained in the k SAR-PDUs are transferred without further processing to the Convergence layer: in the contrary case an error is indicated noticing to the Convergence layer how many bytes of the UBs have been lost.

Preferably when the first service byte of a SAR-PDU reports the SPEC Type Indication, are generated indication signals of the start of significant data blocks or sub-blocks of the multimedia flow: these signals, appropriately transferred in the time in a way to maintain a time correspondence with the moment in which the data to which they referred are transferred to the HLP layer for the processing of the multimedia flow, themselves are transferred to the HLP level for the processing of the multimedia flow to facilitate the functions.

The termination function of the sublayer SAR, after having processed the SAR service bytes as described just before, and having cleaned the last SAR-PDU from the K_{PAD-SARi} fictitious information bytes, reassembles the CS Payload Data Unit and transfers it to the termination functions of the Convergence sublayer.

The termination functions of the Convergence sublayer (CS) separate, when the CS-PDU coincides with the transfer unit UTi, the set Si from the K_{CS} service bytes of the sublayer CS.

Each service byte of the sublayer CS is processed in such a way that the functions of the sublayer CS are correctly fulfilled and that the HPL layer for the processing of the multimedia flow receives all informations which facilitate it. Then the set Si is reassembled.

Alternatively when the CS-PDU contains also error correction information, the functions of the sublayer CS provide for the processing of this information according to the following steps:
1) deinterleaving of the MXi matrixes constituted by the bytes of the blocks BKi and elimination of the fictitious K_{PaddingBlock-I} blocks.
2) correction of each block BKi using the redundancy information; in case of uncorrectable errors generation of an indication of the number of uncorrectable BKi blocks, an indication which is transferred to the HLP layer for the processing of the multimedia flow.
3) elimination of the K_{CSPad l} fictitious _{information bytes, processing of the} KCS service bytes of the sublayer CS and reassembling of the set Si.

The set Si is so transferred to the HLP layer for the processing of the multimedia flow in correspondence of the instants Ck(I) possibly delayed by a constant time offset, reconstructed with the method previously described and based on the use of the service bytes SAR of type START, STOP and SYNCREF.

The splitting up of the set Si in the original Mj blocks Bⱼ, M₁ blocks B₁, ..., and Mₕ blocks Bₕ of each component must not be carried out by the adaptation termination function of the sublayer CS since the HLP layer for the processing of the multimedia flow is able itself to carry out this operation.

While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Method for the implementation of the protocol functions of the ATM adaptation layer for digital data flows at variable speed in an B-ISDN network, said digital data flow being set up by one or more distinct components (COMP1, COMP2, .... COMPj, ..., COMPI), each one of them being provided with mechanisms such to able to collect from the timing of one of these the timing of all the others; said method including an origination function for the adaptation of said digital data flow in a flow of ATM cells arid a termination function for the extraction of said digital data flow from said flow of ATM cells, said origination function of the adaptation being **characterized in that** it includes the following steps:
- detecting for each one of said components (COMP1, COMP2, ..., COMPj, ..., COMPh) binary digital data blocks (B₁, B₂, ..., Bⱼ, ..., Bₕ) with dimension always smaller than a maximum value and anyhow equal to an entire number of bytes generated with constant frequency (F1, F2, ..., Fj, ..., Fh);
- identifying among said components (COMP1, COMP2, ..., COMPj, ..., COMPh) of said data flow a particular component (COMPj);
- identifying a period of time T_{Mj} of a duration equal to the product between the generation period (Tⱼ) of said data blocks Bⱼ of said particular component (COMPj) and a number (Mⱼ) of said data blocks (Bⱼ) of said particular component (COMPj);
- creating an informative set (Si) for each I-th period, being identified by the I-th period a particular period in the sequence of adjacent periods (T_{Mj}), said informative set being set up by the assemblage, for each one of said components (COMP1, COMP2, ..., COMPj, ..., COMPj, ..., COMPh), of the relative number (M1, M2, ..., Mj, ..., Mh) of data blocks (B1, B2, ..., ..., Bh), all generated within the period T_{Mj} itself;
- creating a Transfer Unit (UTi), which coincides with a Convergence Sublayer Payload Data Unit_i (CS-PDUi), adding to said informative set (Si) service informations of the Convergence sublayer;
- splitting up said transfer unit (UTi o CS-PDUi), maintaining the sequentiallity of said bytes contained in itself, in a predetermined number (Ni) of base units (UB₁, UB₂, ..., UB_{Ni}), each one with a dimension equal to (48-m) bytes, except the last one, with eventually a smaller dimension;
- adding to each base unit UB, when m >= 1, m service bytes of the sublayer SAR, which use is defined thanks to the Type Indication, a field comprised in the m service bytes of the sublayer SAR;
- adding to the last one of said base units, when this one has a dimension smaller than (48-m) bytes, a number (K_{PAD-SARi}) of fictitious information bytes, so that the set of said fictitious information bytes and of the bytes of said base unit have a dimension equal to (48-m) bytes;
- setting up Ni SAR Payload Data Units (SAR-PDUs) with a constant dimension equal to 48 bytes, given by the set of one base unit and of said m service bytes of the sublayer SAR, when m>=1, or exclusively by a base unit, when m=0;
- performing in such way that each one of the first n SAR Payload Data Units (SAR-PDUs) of each group of said Ni SAR Payload Data Units (SAR-PDUs) will contain a START Type Indication in the m service bytes SAR;
- inserting the Ni SAR Payload Data Units (SAR-PDUs) obtained in this way in to as many Ni ATM cells;
- transmitting, in such a way that the beginning of the transmission of the first cell of all said groups of Ni cells, occurs in strict instant coincidence Ck(i), all one as with respect to the other at constant time distance and equal to T_{Mj}, and that the transmission of all said groups of Ni cells will be completed before the following instant Ck(i+1), whereby such condition requires a minimum transmission speed (R_{ATM}) of the ATM cells (R_{ATM}>=Ni/T_{Mj}).

2. Method according to claim 1, **characterized in that** said termination functionality of the adaptation is **characterized in that** it comprises the following steps:
- extracting from said Ni ATM cells said Ni SAR Payload Data Units (SAR-PDUs) previously inserted in these;
- detecting for each group of said Ni SAR Payload Data Units (SAR-PDUs) said n SAR Payload Data Units (SAR-PDUs) containing the Type Indication START in m service bytes SAR and generate; in correspondence to the moment of reception of the first of said n SAR Payloiad Data Units (SAR-PDUs), an impulse Ck(i)* getting in this way an impulse sequence Ck(i)*;
- regenerating, from said impulse sequence Ck(i)*, an impulse sequence Ck'(i) with period T_{Mj} and an impulse sequence Ck'(T) with period Tj, after the impulse sequence Ck(i)* having been cleaned from the cell delay variation introduced by the ATM network;
- separating in each one of the SAR Payload Units (SAR-PDUs), said m service bytes of the sublayer SAR and said (K_{PAD-SARi}) bytes of fictitious information from the Ni base units;
- reassembling the transfer unit UTi o CS-PDUi, starting from said Ni base units taking care to maintain the sequentiallity of the base units;
- extracting from said UTi o CS-PDUi said (K_{CS}) service bytes of the Convergence sublayer, obtaining in this way again the information set Si;
- elaborating said (K_{CS}) service bytes generating the following controls and indications to be transferred to the HLP layer for the processing of the of the multimedia flow;
- transferring, immediately after the regeneration of said impulse Ck'(i) the complete set Si to HLP layer for the processing of the multimedia flow in such a way that the transfer will be completed before the generation of the next impulse Ck'(i+1).

3. Method according to claim 1, **characterized in that** said Convergence Sublayer Payload Data Unit-i (CS-PDUi) is obtained from said transfer unit UTi through the following steps:
- splitting up said UTi in BKi coding blocks, each one set up by D_{Blocco} bytes, adding K_{CSPad-i} fictitious information bytes in the last codifying block, when the dimension of the transfer unit (UTi) is not exactly a multiple of D_{Blocco};
- using a block code for the correction of the error, generating for each one of said codifying blocks the relative correction information and setting up in this way BKi codified blocks, each one composed by D_{Bloc-Cod} bytes;
- interleaving in groups of K_{bl}, according to a modality of writing in bytes of each one of said blocks in one line of a matrix of the dimension K_{bl} columns for D_{Bloc-Cod} lines, and of reading again in bytes for columns of said matrix, said codified BKi blocks, setting up in this way MXi matrixes, each one set up by K_{bl} of said codified blocks, except the last one of said matrixes in which, in the case that BKi is not an exact multiple of K_{b1} also K_{PaddinBlock-i} blocks of fictitious information are inserted, in such a way that also said last matrix will have the same dimension of the others;
- constituting through said MXi matrixes said CS-PDUi;
and further **characterized in that** from the Convergence Sublayer Payload Data Unit-i (CS-PDUi) the transfer unit UTi is obtained through the following steps:
- splitting up the Convergence Sublayer Payload Data Unit-i (CS-PDUi) in MXi matrixes of the dimension K_{b1} * D_{Bloc-Cod} bytes writing in columns said matrixes;
- deinterleaving said codified blocks from each one of said matrixes MXi, reading again said matrixes in lines;
- eliminating said K_{PaddingBlock-i} blocks of fictitious information;
- correcting said codified blocks by using the correction data relative to each block obtaining in this way again said codification blocks BKi;
- eliminating said (K_{CSPad-i}) bytes of fictitious information from the last codified block;
- reconstructing in this way said transfer unit (UTi).

4. Method according to claim 1, **characterized in that** the number m of service bytes of the sublayer SAR contained in each one of said Ni SAR Payload Data Units (SAR-PDUs) is constant.

5. Method according to claim 1, **characterized in that** each one of said SAR Payload Data Units (SAR-PDU) may contain 0 or m service bytes of the sublayer SAR and that the cell ATM, Inside of which is inserted said SAR Payload Data Unit (SAR-PDU) containing m service bytes SAR, has the bit User-to-User Indication of the field PTI of the header with preferential value, and that the ATM cell, inside of which said SAR Payload Data Unit (SAR-PDU) completely filled up by a base unite (UB) is inserted, has said bit User-to-User Indication of the PTI field with other value.

6. Method according to claim 1, **characterized in that** said origination function of the data adaptation includes moreover the step consisting in inserting in the field Type Indication of the first of said m service bytes of the last SAR Payload Data Unit (SAR-PDU) of each one of said groups of Ni, SAR Payload Data Units (SAR-PDUs) an indication of group end (STOP).

7. Method according to claim 1, **characterized in that** said origination function of data adaptation comprises moreover the following step consisting in inserting in the field Type Indication of the first of said m service bytes of each k-th of said SAR Payload Data Unit (SAR-PDU) in each one of said groups of Ni SAR Payload Data Unit (SAR-PDU) a sequence indication (SEQ) and the value of a sequential counting.

8. Method according to claim 1, **characterized in that** said origination function of data adaptation includes moreover the following step of inserting in the field Type Indication of the first of said m service bytes of each SAR Payload Data Unit (SAR-PDU) in each one of said groups of Ni SAR Payload Data Unit (SAR-PDU) when said SAR Payload Data Unit (SAR-PDU) will be transferred to the layer ATM in instants very near to corresponding instants, or transferred by a constant time offset with regard to, at the beginning of even periods or multiples of the period T_{Mj} of generation of the blocks of the multimedia component COMPj used for the timing transfer, of the transfer unit (CS-PDUi) a synchronization indicator.

9. Method according to claim 1, **characterized in that** said step of cleaning said reconstructed impulse Ck'(i) from cell delay variation is implemented through a phase lock circuit

## Patentansprüche

1. Verfahren zur Realisierung der Protokollfunktionen der ATM-Anpassungsschicht für digitale Datenflüsse mit variabler Geschwindigkeit in einem B-ISDN-Netz, wobei der besagte Datenfluss aus einer oder mehreren verschiedenen Komponenten (COMP1, COMP2, ..., COMPj, ..., COMP1) zusammengesetzt ist, von denen jede mit Mechanismen ausgestattet ist, die so beschaffen sind, dass es möglich ist, aus der Taktgebung einer von ihnen die Taktgebung aller anderen zu gewinnen; wobei das besagte Verfahren eine Einleitungsfunktion für die Anpassung des besagten digitalen Datenflusses an einen Fluss von ATM-Zellen und eine Beendigungsfunktion für die Extraktion des besagten digitalen Datenflusses aus dem besagten Fluss von ATM-Zellen umfasst, wobei die besagte Einleitungsfunktion der Anpassung **dadurch gekennzeichnet ist, dass** sie die folgenden Schritte umfasst:
- Erkennen von mit einer konstanten Frequenz (F1, F2, ..., Fj, ..., Fh) erzeugten binären digitalen Datenblöcken (B₁, B₂, ..., Bⱼ, ..., Bₕ) mit einer Größe, die stets kleiner als ein Maximalwert und in jedem Falle gleich einer ganzen Anzahl von Bytes ist, für jede der besagten Komponenten (COMP1, COMP2, ..., COMPj, ..., COMPh);
- Identifizieren einer speziellen Komponente (COMPj) unter den besagten Komponenten (COMP1, COMP2, ..., COMPj, ..., COMPh) des besagten Datenflusses;
- Identifizieren eines Zeitintervalls (T_{Mj}) mit einer Dauer, die gleich dem Produkt des Zeitintervalls der Erzeugung (Tⱼ) der besagten Datenblöcke (Bⱼ) der besagten speziellen Komponente (COMPj) und einer Anzahl (Mⱼ) der besagten Datenblöcke (Bⱼ) der besagten speziellen Komponente (COMPj) ist;
- Erzeugen eines Informationssatzes (Si) für jedes I-te Zeitintervall, wobei als das I-te Zeitintervall ein bestimmtes Zeitintervall in der Folge von aneinander grenzenden Zeitintervallen (T_{Mj}) bezeichnet wird, wobei der besagte Informationssatz durch die Zusammenstellung der jeweiligen Anzahlen (M1, M2, ..., Mj, ..., Mh) von Datenblöcken (B1, B2, ..., ..., Bh), die alle innerhalb des Zeitintervalls T_{Mj} selbst erzeugt werden, für die einzelnen besagten Komponenten (COMP1, COMP2, ..., COMPj, ..., COMPj, ..., COMPh) gebildet wird;
- Erzeugen einer Übertragungseinheit (UTi), welche mit einer Konvergenzteilschicht-Nutzlastdateneinheit_i (CS-PDUi) zusammenfällt, durch Hinzufügen von Service-Informationen der Konvergenzteilschicht zu dem besagten Informationssatz (Si);
- Aufspalten der besagten Übertragungseinheit (UTi o CS-PDUi) unter Beibehaltung der Aufeinanderfolge der besagten in ihr enthaltenen Bytes in eine vorgegebenen Anzahl (Ni) von Basiseinheiten (UB₁, UB₂, ..., UB_{Ni}), von denen jede eine Größe von (48-m) Bytes hat, mit Ausnahme der letzten, welche eventuell eine geringere Größe hat;
- Hinzufügen, wenn m >= 1 ist, von m Service-Bytes der Teilschicht SAR, deren Verwendung mittels der Typangabe, einem in den m Service-Bytes der Teilschicht SAR enthaltenen Feld, definiert ist, zu jeder Basiseinheit UB;
- Hinzufügen einer Anzahl (K_{PAD-SARi}) von Bytes fiktiver Information zur letzten der besagten Basiseinheiten, wenn diese eine Größe hat, die geringer als (48-m) Bytes ist, so dass der aus den besagten Bytes fiktiver Information und den Bytes der besagten Basiseinheit bestehende Satz eine Größe hat, die (48-m) Bytes beträgt;
- Zusammenstellen von Ni SAR Nutzlastdateneinheiten (SAR-PDUs) mit einer konstanten Größe von 48 Bytes, die sich aus dem Satz einer Basiseinheit und aus den besagten m Service-Bytes der Teilschicht SAR ergibt, wenn m>=1 ist, oder ausschließlich aus einer Basiseinheit, wenn m=0 ist;
- Vorgehen auf eine solche Weise, dass jede der ersten n SAR Nutzlastdateneinheiten (SAR-PDUs) jeder Gruppe von besagten Ni SAR Nutzlastdateneinheiten (SAR-PDUs) eine Typangabe START in den m Service-Bytes SAR enthält;
- Einfügen der auf diese Weise erhaltenen Ni SAR Nutzlastdateneinheiten (SAR-PDUs) in ebenso viele Ni ATM-Zellen;
- Übertragen auf eine solche Weise, dass der Beginn der Übertragung der ersten Zelle aller besagten Gruppen von Ni Zellen in strenger Übereinstimmung mit dem Zeitpunkt Ck(i) erfolgt, wobei alle voneinander jeweils einen konstanten zeitlichen Abstand haben, der gleich T_{Mj} ist, und dass die Übertragung aller besagten Gruppen von Ni Zellen vor dem folgenden Zeitpunkt Ck(i+1) beendet ist, wodurch diese Bedingung eine Mindest-Übertragungsgeschwindigkeit (R_{ATM}) der ATM-Zellen erfordert (R_{ATM}>=Ni/T_{Mj}).

2. Verfahren nach Anspruch 1, **dadurch gekennzeichnet, dass** die besagte Beendigungsfunktion der Anpassung **dadurch gekennzeichnet ist, dass** sie die folgenden Schritte umfasst:
- Extrahieren der besagten Ni SAR Nutzlastdateneinheiten (SAR-PDUs) aus den besagten Ni ATM-Zellen, in die sie zuvor eingefügt wurden;
- Erkennen der besagten n die Typangabe START in m Service-Bytes SAR enthaltenden SAR Nutzlastdateneinheiten (SAR-PDUs) für jede Gruppe von besagten Ni SAR Nutzlastdateneinheiten (SAR-PDUs) und, in Übereinstimmung mit dem Zeitpunkt des Empfangs der ersten der besagten n SAR Nutzlastdateneinheiten (SAR-PDUs), Erzeugen eines Impulses Ck(i)*, so dass auf diese Weise eine Impulsfolge Ck(i)* erhalten wird;
- Regenerieren einer Impulsfolge Ck'(i) mit einer Periode T_{Mj} und einer Impulsfolge Ck'(T) mit einer Periode Tj aus der besagten Impulsfolge Ck(i)*, nachdem die Impulsfolge Ck(i)* von den durch das ATM-Netz hervorgerufenen Schwankungen der Zellenverzögerung gereinigt wurde;
- Trennen der besagten m Service-Bytes der Teilschicht SAR und der besagten (K_{PAD-SARi}) Bytes fiktiver Information von den Ni Basiseinheiten in jeder der SAR Nutzlastdateneinheiten (SAR-PDUs);
- Assemblieren der Übertragungseinheit UTi o CS-PDUi ausgehend von den besagten Ni Basiseinheiten, unter sorgfältiger Beachtung der Aufeinanderfolge der Basiseinheiten;
- Extrahieren der besagten (K_{CS}) Service-Bytes der Konvergenzteilschicht aus der besagten UTi o CS-PDUi, so dass auf diese Weise wieder der Informationssatz Si erhalten wird;
- Bearbeiten der besagten (K_{CS}) Service-Bytes zur Erzeugung der folgenden Steuerungen und Angaben, die zur Verarbeitung des Multimedia-Datenflusses zur HLP-Schicht zu übertragen sind;
- Übertragen des kompletten Satzes Si unmittelbar nach der Regenerierung des besagten Impulses Ck'(i) zur HLP-Schicht für die Verarbeitung des Multimedia-Datenflusses auf eine solche Weise, dass die Übertragung vor der Generierung des nächsten Impulses Ck'(i+1) abgeschlossen ist.

3. Verfahren nach Anspruch 1, **dadurch gekennzeichnet, dass** die besagte Konvergenzteilschicht-Nutzlastdateneinheit-i (CS-PDUi) aus der besagten Übertragungseinheit UTi über die folgenden Schritte erhalten wird:
- Aufspalten der besagten UTi in BKi Kodierungsblöcke, von denen jeder aus D_{Blocco} Bytes gebildet wird, wobei im letzten Kodierungsblock K_{CSPad-i} Bytes fiktiver Information hinzugefügt werden, wenn die Größe der Übertragungseinheit (UTi) nicht genau ein Vielfaches von D_{Blocco} ist;
- Verwenden eines Blockcodes für die Korrektur des Fehlers, indem für jeden der besagten Kodierungsblöcke die zugehörige Korrekturinformation erzeugt wird und auf diese Weise BKi kodierte Blöcke zusammengestellt werden, von denen jeder aus D_{Bloc-Cod} Bytes zusammengesetzt ist;
- Verschachteln der besagten BKi kodierten Blöcke in Gruppen von K_{bl} Blöcken nach einer Verfahrensweise, bei der die Bytes jedes der besagten Blöcke in eine Zeile einer Matrix mit der Dimension K_{bl} Spalten mal D_{Bloc-Cod} Zeilen geschrieben werden und die Bytes der besagten Matrix dann spaltenweise gelesen werden, so dass auf diese Weise MXi Matrizen zusammengestellt werden, von denen jede aus K_{bl} der besagten kodierten Blöcke zusammengesetzt ist, mit Ausnahme der letzten der besagten Matrizen, in welche, falls BKi kein exaktes Vielfaches von K_{b1} ist, auch K_{PaddinBlock-i} Blöcke fiktiver Information eingesetzt werden, auf eine solche Weise, dass auch die besagte letzte Matrix dieselbe Dimension wie die anderen hat;
- Bilden der besagten CS-PDUi über die besagten MXi Matrizen; und ferner **dadurch gekennzeichnet, dass** aus der Konvergenzteilschicht-Nutzlastdateneinheit-i (CS-PDUi) die Übertragungseinheit UTi über die folgenden Schritte erhalten wird:
- Aufspalten der Konvergenzteilschicht-Nutzlastdateneinheit-i (CS-PDUi) in MXi Matrizen der Dimension K_{b1} * D_{Bloc-Cod} Bytes, wobei die besagten Matrizen spaltenweise geschrieben werden;
- Entschachteln der besagten kodierten Blöcke aus jeder der besagten Matrizen MXi, indem die besagten Matrizen wieder zeilenweise gelesen werden;
- Entfernen der besagten K_{PaddingBlock-i} Blöcke fiktiver Information;
- Korrigieren der besagten kodierten Blöcke unter Verwendung der zum jeweiligen Block gehörenden Korrekturdaten, so dass auf diese Weise wieder die besagten Kodierungsblöcke BKi erhalten werden;
- Entfernen der besagten (K_{CSPad-i}) Bytes fiktiver Information aus dem letzten kodierten Block;
- Wiederherstellen der besagten Übertragungseinheit (UTi) auf diese Weise.

4. Verfahren nach Anspruch 1, **dadurch gekennzeichnet, dass** die Anzahl m der Service-Bytes der Teilschicht SAR, die in jeder der besagten Ni SAR Nutzlastdateneinheiten (SAR-PDUs) enthalten sind, konstant ist.

5. Verfahren nach Anspruch 1, **dadurch gekennzeichnet, dass** jede der besagten SAR Nutzlastdateneinheiten (SAR-PDU) 0 oder m Service-Bytes der Teilschicht SAR enthalten kann und dass für eine ATM-Zelle, in welche eine besagte SAR Nutzlastdateneinheit (SAR-PDU), die m Service-Bytes SAR enthält, eingesetzt wird, das Bit User-to-User Indication des Feldes PTI des Headers einen bevorzugten Wert hat, und dass für eine ATM-Zelle, in welche eine besagte SAR Nutzlastdateneinheit (SAR-PDU), die vollständig von einer Basiseinheit (UB) ausgefüllt wird, eingesetzt wird, das besagte Bit User-to-User Indication des Feldes PTI einen anderen Wert hat.

6. Verfahren nach Anspruch 1, **dadurch gekennzeichnet, dass** die besagte Einleitungsfunktion der Datenanpassung außerdem einen Schritt umfasst, der darin besteht, dass in das Feld Typangabe des ersten der besagten m Service-Bytes der letzten SAR Nutzlastdateneinheit (SAR-PDU) jeder der besagten Gruppen von Ni SAR Nutzlastdateneinheiten (SAR-PDUs) eine Angabe des Endes der Gruppe (STOP) eingesetzt wird.

7. Verfahren nach Anspruch 1, **dadurch gekennzeichnet, dass** die besagte Einleitungsfunktion der Datenanpassung außerdem den folgenden Schritt umfasst, der darin besteht, dass in das Feld Typangabe des ersten der besagten m Service-Bytes jeder k-ten der besagten SAR Nutzlastdateneinheiten (SAR-PDU) in jeder der besagten Gruppen von Ni SAR Nutzlastdateneinheiten (SAR-PDU) eine Sequenzangabe (SEQ) und der Wert einer sequentiellen Zählung eingesetzt werden.

8. Verfahren nach Anspruch 1, **dadurch gekennzeichnet, dass** die besagte Einleitungsfunktion der Datenanpassung außerdem den folgenden Schritt des Einsetzens eines Synchronisations-Indikators in das Feld Typangabe des ersten der besagten m Service-Bytes jeder SAR Nutzlastdateneinheit (SAR-PDU) in jeder der besagten Gruppen von Ni SAR Nutzlastdateneinheiten (SAR-PDU) umfasst, wenn die besagte SAR Nutzlastdateneinheit (SAR-PDU) zur Schicht ATM zu Zeitpunkten übertragen werden soll, die sehr nahe bei entsprechenden Zeitpunkten liegen, oder mit einem konstanten Zeitversatz bezüglich derselben übertragen wird, am Anfang von geradzahligen Zeitintervallen oder Vielfachen des Zeitintervalls T_{Mj} der Erzeugung der Blöcke der Multimedia-Komponente COMPj, die für die Übertragung der Zeitgebung der Übertragungseinheit (CS-PDUi) verwendet wird.

9. Verfahren nach Anspruch 1, **dadurch gekennzeichnet, dass** der besagte Schritt des Reinigens der besagten wiederhergestellten Impulse Ck'(i) von Schwankungen der Zellenverzögerung über einen Phasensynchronisationskreis implementiert wird.

## Revendications

1. Procédé de réalisation des fonctions protocolaires de la couche d'adaptation ATM pour flux de données numériques à vitesse variable dans un réseau RNIS-LB, ledit flux de données numériques étant constitué d'une ou de plusieurs composantes distinctes (COMP1, COMP2,..., COMPj,..., COMPI), chacune d'elles étant pourvues de mécanismes tels qu'ils sont capables d'obtenir à partir de la synchronisation de l'une de celles-ci la synchronisation de toutes les autres ; ledit procédé comprenant une fonction de début de l'adaptation dudit flux de données numériques en un flux de cellules ATM et une fonction de fin pour l'extraction dudit flux de données numériques à partir dudit flux de cellules ATM, ladite fonction de début de l'adaptation étant **caractérisée en ce qu'**elle comprend les étapes suivantes :
- détection, pour chacune desdites composantes (COMP1, COMP2,..., COMPj,..., COMPh), de blocs de données numériques binaires (B₁, B₂,..., Bⱼ,..., Bₕ) de dimension toujours inférieure à une valeur maximale et en tout cas égale à un nombre entier d'octets produits à une fréquence constante (F1, F2,..., Fj,..., Fh) ;
- identification, parmi lesdites composantes (COMP1, COMP2,..., COMPj,..., COMPh) dudit flux de données, d'une composante particulière (COMPj) ;
- identification d'un intervalle de temps T_{Mj} de durée égale au produit de l'intervalle de production (Tⱼ) desdits blocs de données Bⱼ de ladite composante particulière (COMPj) et d'un nombre (Mⱼ) desdits blocs de données (Bⱼ) de ladite composante particulière (COMPj) ;
- création d'une série informative (Si) pour chaque I^{ième} intervalle, le I^{ième} intervalle désignant un intervalle particulier de la séquence d'intervalles adjacents (T_{Mj}), ladite série informative étant constituée par l'assemblage, pour chacune desdites composantes (COMP1, COMP2,..., COMPj,..., COMPj,..., COMPh), du nombre associé (M1, M2,..., Mj,..., Mh) de blocs de données (B1, B2,...,..., Bh), tous produits pendant l'intervalle T_{Mj} même ;
- création d'une unité de transfert (UTi), qui coïncide avec une unité_i de données utiles de la sous-couche de convergence (CS-PDUi), ce qui ajoute à ladite série informative (Si) des informations de service de la sous-couche de convergence ;
- découpage de ladite unité de transfert (UTi ou CS-PDUi), en préservant la séquentialité desdits octets qui y sont contenus, en un nombre prédéterminé (Ni) d'unités de base (UB₁, UB₂,..., UB_{Ni}), chacune de dimension égale à (48-m) octets, excepté la dernière, éventuellement de dimension plus petite ;
- adjonction à chaque unité de base UB, lorsque m ≥ 1, de m octets de service de la sous-couche SAR, dont l'utilisation est définie grâce à l'indication de type, un champ compris dans les m octets de service de la sous-couche SAR ;
- adjonction à la dernière desdites unités de base, lorsqu'elle est de dimension inférieure à (48-m) octets, d'un nombre (K_{PAD-SARi}) d'octets d'informations fictives de telle sorte que la série formée des octets d'informations fictives et des octets de ladite unité de base soit de dimension égale à (48-m) octets ;
- constitution de Ni unités de données utiles SAR(SAR-PDU) de dimension constante égale à 48 octets, donnée par la série formée d'une unité de base et desdits m octets de service de la sous-couche SAR, quand m ≥ 1, ou exclusivement par une unité de base, quand m = 0 ;
- exécution de telle sorte que chacune des n premières unités de données utiles SAR (SAR-PDU) de chaque groupe desdites Ni unités de données utiles SAR (SAR-PDU) contienne une indication de type START dans les m octets de service SAR ;
- insertion des Ni unités de données utiles SAR (SAR-PDU) obtenues de la sorte dans un même nombre Ni de cellules ATM ;
- transmission de telle sorte que le début de la transmission de la première cellule de tous lesdits groupes de Ni cellules coïncide strictement avec les instants Ck(i), tous étant espacés l'un de l'autre d'un intervalle de temps constant et égal à T_{Mj}, et que la transmission de tous lesdits groupes de Ni cellules soit achevée avant l'instant suivant Ck(i+1), étant entendu que cette condition requiert une vitesse de transmission minimum (R_{ATM}) des cellules ATM (R_{ATM} ≥ Ni/T_{Mj}).

2. Procédé selon la revendication 1, **caractérisé en ce que** ladite fonctionnalité de fin de l'adaptation est **caractérisée en ce qu'**elle comprend les étapes suivantes :
- extraction, desdites Ni cellules ATM, desdites Ni unités de données utiles SAR (SAR-PDU) qui y ont été insérées précédemment ;
- détection, pour chaque groupe desdites Ni unités de données utiles SAR (SAR-PDU), desdites n unités de données utiles SAR (SAR-PDU) contenant l'indication de type START dans m octets de service SAR et production, en concordance avec le moment de la réception de la première desdites n unités de données utiles SAR (SAR-PDU), d'une impulsion Ck(i)* pour obtenir de la sorte une séquence d'impulsions Ck(i)* ;
- régénération, à partir de ladite séquence d'impulsions Ck(i)*, d'une séquence d'impulsions Ck'(i) de période T_{Mj} et d'une séquence d'impulsions Ck'(T) de période Tj, après que la séquence d'impulsions Ck(i)* a été débarrassée de la variation du délai de transfert par cellule introduite par le réseau ATM ;
- séparation, dans chacune des unités de données utiles SAR (SAR-PDU), desdits m octets de service de la sous-couche SAR et desdits (K_{PAD-SARi}) octets d'informations fictives à partir des Ni unités de base ;
- réassemblage de l'unité de transfert UTi ou CS-PDUi, à partir desdites Ni unités de base en veillant à maintenir la séquentialité des unités de base ;
- extraction, desdites UTi ou CS-PDUi, desdits (K_{CS}) octets de service de la sous-couche de convergence pour, de cette façon, obtenir à nouveau la série d'informations Si ;
- traitement desdits (K_{CS}) octets de service pour produire les commandes et indications suivantes à transférer à la couche HLP de traitement du flux multimédia ;
- transfert, immédiatement après la régénération desdites impulsions Ck'(i), de toute la série Si à la couche HLP de traitement du flux multimédia de telle sorte que le transfert soit terminé avant la production de l'impulsion suivante Ck'(i+1).

3. Procédé selon la revendication 1, **caractérisé en ce que** l'unité-i de données utiles de la sous-couche de convergence (CS-PDUi) est obtenue à partir de ladite unité de transfert UTi au moyen des étapes suivantes :
- découpage de ladite UTi en BKi blocs de codage, chacun constitué de D_{Blocco} octets, ajout de K_{CSPad-i} octets d'informations fictives dans le dernier bloc de codification lorsque la dimension de l'unité de transfert (UTi) n'est pas exactement un multiple de D_{Blocco} ;
- utilisation d'un code de bloc pour la correction d'erreur, production pour chacun desdits blocs de codification des informations de correction s'y rapportant et constitution de la sorte de BKi blocs codifiés, chacun composé de D_{Bloc-Cod} octets ;
- entrelacement par groupes de K_{bl}, selon un mode d'écriture en octets de chacun desdits blocs sur une ligne d'une matrice de dimension égale à K_{bl} colonnes sur D_{Bloc-Cod} lignes, et de relecture en octets pour les colonnes de ladite matrice, desdits BKi blocs codifiés, pour constituer de cette façon MXi matrices, chacune constituée de K_{bl} desdits blocs codifiés, excepté la dernière desdites matrices dans laquelle, dans le cas où BKi n'est pas un multiple exact de K_{b1}, K_{PaddinBlock-i} blocs d'informations fictives sont aussi insérés, de telle sorte que ladite dernière matrice a également la même dimension que les autres ;
- constitution, au moyen desdites MXi matrices, de ladite CS-PDUi ; et **caractérisé par** ailleurs en ce que, à partir de l'unité-i de données utiles de la sous-couche de convergence (CS-PDUi), l'unité de transfert UTi est obtenue au moyen des étapes suivantes :
- découpage de l'unité-i de données utiles de la sous-couche de convergence (CS-PDUi) en MXi matrices de dimension égale à K_{b1}*D_{Bloc-Cod} octets, écriture desdites matrices en colonnes ;
- désentrelacement desdits blocs codifiés à partir de chacune desdites MXi matrices, relecture desdites matrices en lignes ;
- élimination desdits K_{PaddingBlock-i} blocs d'informations fictives ;
- correction desdits blocs codifiés en utilisant les données de correction relatives à chaque bloc pour, de cette façon, obtenir à nouveau lesdits BKi blocs de codification ;
- élimination desdits (K_{CSPad-i}) octets d'informations fictives dans le dernier bloc codifié ;
- reconstitution de la sorte de ladite unité de transfert (UTi).

4. Procédé selon la revendication 1, **caractérisé en ce que** le nombre m d'octets de service de la sous-couche SAR contenus dans chacune desdites Ni unités de données utiles SAR (SAR-PDU) est constant.

5. Procédé selon la revendication 1, **caractérisé en ce que** chacune desdites unités de données utiles SAR (SAR-PDU) peut contenir 0 ou m octets de service de la sous-couche SAR et **en ce que** la cellule ATM à l'intérieur de laquelle est insérée ladite unité de données utiles SAR (SAR-PDU) contenant m octets de service SAR, comprend le bit d'indication d'usager à usager du champ PTI de l'en-tête qui a la valeur préférentielle et **en ce que** la cellule ATM à l'intérieur de laquelle ladite unité de données utiles SAR (SAR-PDU) complètement remplie par une unité de base (UB) est insérée, comprend ledit bit d'indication d'usager à usager du champ PTI qui a l'autre valeur.

6. Procédé selon la revendication 1, **caractérisé en ce que** ladite fonction de début de l'adaptation des données comprend de plus l'étape consistant à insérer dans le champ d'indication de type du premier desdits m octets de service de la dernière unité de données utiles SAR (SAR-PDU) de chacun desdits groupes de Ni unités de données utiles SAR (SAR-PDU), une indication de fin de groupe (STOP).

7. Procédé selon la revendication 1, **caractérisé en ce que** ladite fonction de début de l'adaptation des données comprend de plus l'étape suivante consistant à insérer dans le champ de l'indication de type du premier desdits m octets de service de chaque k^{ième} desdites unités de données utiles SAR (SAR-PDU) de chacun desdits groupes de Ni unités de données utiles SAR (SAR-PDU) une indication de séquence (SEQ) et la valeur d'un comptage séquentiel.

8. Procédé selon la revendication 1, **caractérisé en ce que** ladite fonction de début de l'adaptation des données comprend de plus l'étape suivante d'insertion dans le champ d'indication de type du premier desdits m octets de service de chaque unité de données utiles SAR (SAR-PDU) de chacun desdits groupes de Ni unités de données utiles SAR (SAR-PDU) lorsque ladite unité de données utiles SAR (SAR-PDU) sera transférée à la couche ATM à des instants très proches des instants correspondants ou transférée avec un décalage temporel constant par rapport auxdits instants correspondants, au commencement d'intervalles ou multiples pairs de l'intervalle T_{Mj} de production des blocs de la composante multimédia COMPj utilisée pour transférer la synchronisation de l'unité de transfert (CS-PDUi), d'un indicateur de synchronisation.

9. Procédé selon la revendication 1, **caractérisé en ce que** ladite étape consistant à débarrasser ladite impulsion reconstituée Ck'(i) de la variation de délai de transfert par cellule est réalisée au moyen d'un circuit à verrouillage de phase.
